# EUROPÄISCHE PATENTSCHRIFT

(11) **EP 0 864 138 B1**
(45) Veröffentlichungstag und Bekanntmachung des Hinweises auf die Patenterteilung: **12.05.1999**
(21) Anmeldenummer: 96941606.4
(22) Anmeldetag: 28.11.1996
(51) Int. Cl.: G07F 7/12

(54) **Verfahren zur Authentisierung einer Chipkarte**
Method for authenticating a smart card
Procédé pour authentifier une carte à puce

(30) Priorität: 01.12.1995 CH 3404/95
(43) Veröffentlichungstag der Anmeldung: 16.09.1998
(73) Patentinhaber: Landis & Gyr Technology Innovation AG, 6301 Zug (CH)
(72) Erfinder: OTTO, Carsten, D-63477 Maintal (DE)
(86) Internationale Anmeldenummer: EP9605258
(87) Internationale Veröffentlichungsnummer: WO9721197

(56) Entgegenhaltungen:
- EP-A- 0 268 106
- EP-A- 0 292 658
- EP-A- 0 409 701
- EP-A- 0 570 924
- EP-A- 0 607 950
- EP-A- 0 621 570

## Beschreibung

Die Erfindung bezieht sich auf ein Verfahren bei einer Benutzung einer Chipkarte gemäss dem Oberbegriff des Anspruchs 1.

Das erfindungsgemässe Verfahren wird vor allem verwendet in fremdbetriebenen Verkaufsautomaten, deren Betreiber nicht identisch sind mit den Verkäufern oder Weiterverkäufern der Chipkarten, die als bargeldloses Zahlungsmittel in den betreffenden Verkaufsautomaten verwendet werden. Die Verkaufsautomaten sind vorzugsweise Waren- oder Dienstleistungs-Verkaufsautomaten, wobei die letzteren bevorzugt Telefonstationen sind.

Bekannt sind Chipkarten der sogenannten dritten Generation, die den Karteninhalt jeweils in eine kryptografische Operation einfliessen lassen können zum Beweis der Echtheit und des noch vorhandenen Geldwertes der Chipkarte. Beispiele solcher Chipkarten sind der bekannte SLE 443X der Firma Siemens.

Gemäß EP-A-0 570 924 sendet ein Auswertegerät (Terminal) Fragedaten an eine Chipkarte (Datenträgeranordnung) und überprüft die von der Chipkarte gegebene Antwort darauf, ob sie nach einem (geheimen) Algorithmus erzeugt wurde, den eine echte Karte ausführt. Um zu verhindern, daß der Algorithmus durch Beobachtung vieler zusammengehöriger Frage- und Antwortdaten ausgeforscht wird, schlägt die Entgegenhaltung vor, die Zahl dieser Authentisierungsversuche zu begrenzen. Ferner soll die Erzeugung der Antwortdaten von in der Datenträgeranordnung enthaltenen Informationen, etwa vom rücksetzbaren Zählerstand eines Authentifikationszählers oder von einem Kontostand, abhängen.

Der Erfindung liegt die Aufgabe zugrunde, das in den bekannten Chipkarten der dritten Generation verwendete kryptografische Verfahren so zu verbessern,
- dass nicht nur die Echtheit der Chipkarte, sondern auch die Höhe eines abgebuchten Geldbetrages kryptogafisch gesichert wird und
- dass überhöhte in Rechnung gestellte Verrechnungsbeträge eines Fremdbetreibers zuhanden der Kartenverkäufer bzw. Kartenweiterverkäufer, die durch in betrügerischer Absicht getätigte missbräuchliche Benutzungen der Chipkarten verursacht werden, verhindert werden, so dass den Verrechnungsbeträgen zwangsweise jeweils gleichwertige Abbuchungen der Chipkarten gegenüber stehen.

Die genannte Aufgabe wird erfindungsgemäss durch die im Anspruch 1 angegebenen Merkmale gelöst. Vorteilhafte Ausgestaltungen der Erfindung ergeben sich aus den abhängigen Ansprüchen.

Ein Ausführungsbeispiel der Erfindung ist in der Zeichnung dargestellt und wird im folgenden näher beschrieben.

Es zeigen:
- Fig. 1: ein prinzipielles Schaltbild eines Auswertegerätes eines Verkaufsautomaten, in dessen Kartenschlitz eine Chipkarte steckt,
- Fig. 2: ein Schaltbild einer möglichen Anordnung zur Erzeugung eines durch ein Zufallssignal ausgelösten Antwortsignals und
- Fig. 3: ein prinzipielles Schaltbild einer auf der Chipkarte vorhandenen Anordnung zur Durchführung des erfindungsgemässen Verfahrens.

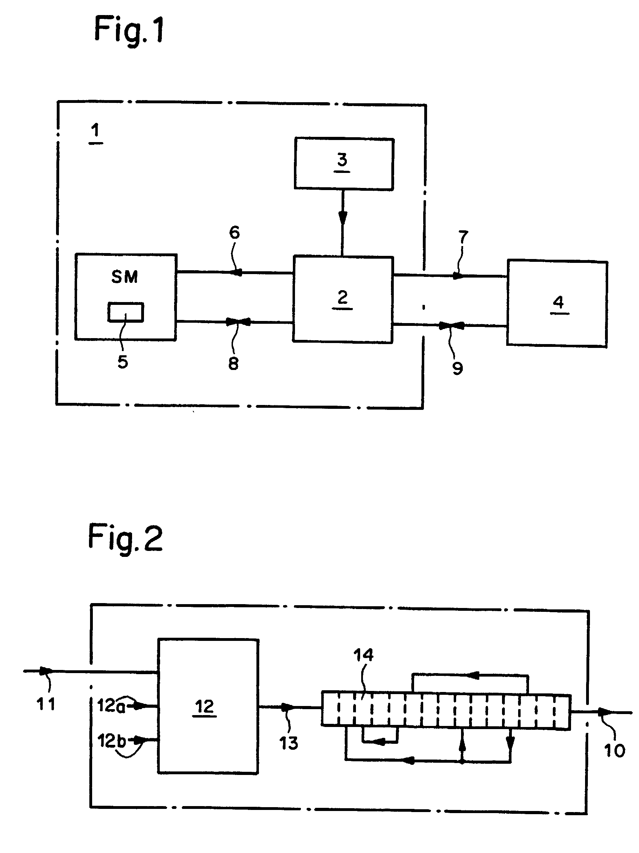

Die Verkaufsautomaten enthalten ein Auswertegerät 1, welches seinerseits ein Terminal 2, ein Sicherheitsmodul SM und eine Speisung 3 zum Speisen der elektronischen Schaltungen sowohl des Auswertegerätes 1 als auch einer Chipkarte 4, falls die letztere in einem Kartenschlitz des Verkaufsautomaten gesteckt ist (siehe Fig. 1). Das Sicherheitsmodul enthält einen Verrechnungszähler 5 zum akkumulieren von Verrechnungsbeträgen, die ein Betreiber des Verkaufsautomaten einem Verkäufer bzw. Weiterverkäufer der Chipkarten in Rechnung stellen kann. Die Speisung 3 speist das Sicherheitsmodul SM und die Chipkarte 4 mit Energie 6 bzw. 7 über das Terminal 2, welches die Speisung der Chipkarte ein- und ausschalten kann. Informationen 8 oder 9 werden in beiden Übertragungsrichtungen zwischen dem Terminal 2 und dem Sicherheitsmodul SM bzw. zwischen dem Terminal 2 und der Chipkarte 4 übertragen.

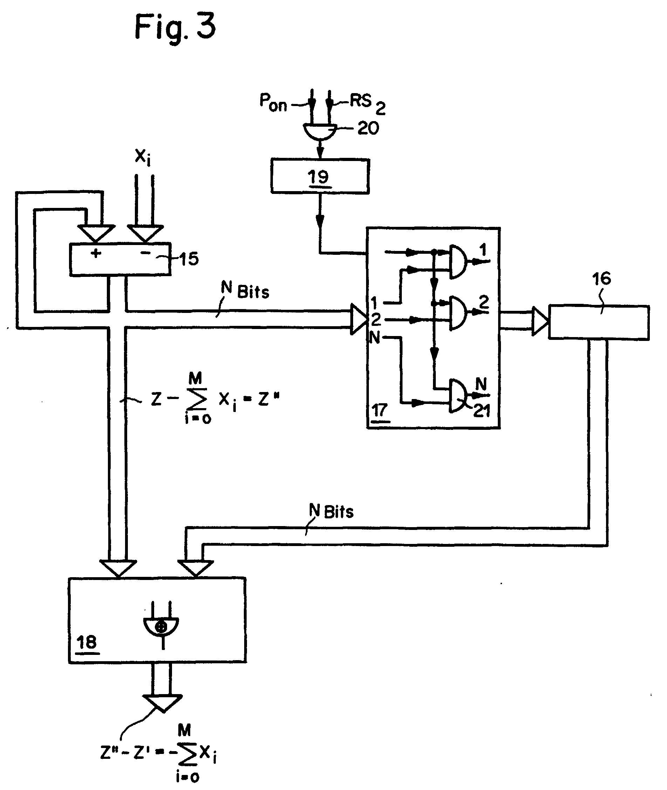

Zur Erzeugung eines Antwortsignals 10 mittels eines Zufallssignals 11 ist auf der Chipkarte 4 und im Sicherheitsmodul SM je eine kryptografische Anordnung vorhanden. Das Zufallssignal 11 ist vorzugsweise eine Zufallsbitfolge. Die kryptografische Anordnung ist eine beliebige der vielen bekannten Anordnungen dieser Art, wovon eine mögliche Anordnung in der Fig. 2 dargestellt ist. Diese enthält eine Verknüpfungsanordnung 12 zur Erzeugung eines Aufrufsignais 13, welches eine Funktion des Zufallsignals 11, von Identifikationsangaben 12a der Chipkarte 2 und einer Geldwertangabe 12b ist, die im erfindungsgemässen Verfahren immer ein Differenzwert von in einem ersten und zweiten Zähler der Chipkarte 4 (siehe Fig. 3, Zähler 15 und 16) enthaltenen Geldwerten. Die Angaben 12a und 12b sind auf einen ersten bzw. zweiten Eingang der Verknüpfungsanordnung 12 geführt, während das Zufallssignal vom Sicherheitsmodul SM über das Terminal 2 kommend einen dritten Eingang der Verknüpfungsanordnung 12 speist. Das am Ausgang der Verknüpfungsanordnung 12 anstehende Aufrufsignal 13 ist ein serielles Eingangssignal eines mit Rückkopplungen versehenen Schieberegisters 14, welches mit seinen Rückkopplungen einen Algorithmus darstellt. Im Schieberegister 14 ist zu Beginn einer jeden Authentifizierung ein Codeschlüssel gespeichert. Ein an einem seriellen Ausgang des Schieberegisters 14 erzeugtes Ausgangssignal ist das Antwortsignal 10 des Schieberegisters 14 auf das Aufrufsignal 13. Es ist eine Funktion des Codeschlüssels, des Algorithmus sowie des Aufrufsignals 13 und damit auch eine Funktion des Zufallssignals 11, der Identifikationsangaben 12a sowie der Geldwertangabe 12b. Der Codeschlüssel, der Algorithmus sowie die Angaben 12a und 12b stellen zusammen ein Abbild der Chipkarte 4 dar. Für weitere Details siehe EP 0 616 429 A1 und EP 0 624 839 A1.

Eine auf der Chipkarte 4 vorhandene Anordnung zur Durchführung des erfindungsgemässen Verfahrens enthält ausser dem ersten Zähler 15 und dem zweiten Zähler 16 noch eine Freigabeanordnung 17, ein Subtraktionsglied 18, eine Setzschaltung 19 und ein Oder-Gatter 20. In der Fig. 3 gilt dem leichteren Verständnis wegen die Annahme, dass die verwendete Logik eine Parallel-Verarbeitungslogik ist. In der Praxis wird jedoch bevorzugt eine serielle Verarbeitungslogik verwendet. In der in der Fig. 3 dargestellten Anordnung ist ein N Bit-Ausgang des ersten Zählers 15 über N Bit-Busverbindungen mit je einem ersten N Bit-Eingang des Zählers 15, des Subtraktionsgliedes 18 und der Freigabeanordnung 17 verbunden, während an einem zweiten N Bit-Eingang des Zählers 15 derjenige Geldwert Xᵢ einer Ware oder Dienstleistung ansteht, um den ein im Zähler 15 enthaltener Geldwert Z beim Bezug der Ware bzw. Dienstleistung reduziert werden muss. Der Zähler funktioniert somit als Akkumulator negativer Geldwerte, in dem zu Beginn der Geldwert Z gespeichert ist. Die Freigabeanordnung 17 besitzt ein Und-Gatter 21 pro Bit, also total N Und-Gatter, deren erste Eingänge die N Bit des ersten Eingangs der Freigabeanordnung 17 bilden, während die zweiten Eingänge der N Und-Gatter 21 miteinander verbunden sind und zusammen einen zweiten Eingang der Freigabeanordnung 17 bilden. Ein N Bit-Ausgang der letzteren ist über eine Busverbindung auf einen N Bit-Eingang des zweiten Zählers 16 geführt, dessen N Bit-Ausgang über eine Busverbindung mit einem zweiten N Bit-Eingang des Subtraktionsgliedes 18 verbunden ist. Sobald die Speisung der Chipkarte 4 vom Terminal 2 eingeschaltet wird, erscheint an einem ersten Eingang des Oder-Gatters 19 ein Signal Pₒₙ (d. h. "Power On"), welches in der Setzanordnung 19 ein erstes Setzsignal RS₁ erzeugt und über einen Ausgang der Setzanordnung 19 dem zweiten Eingang der Freigabeanordnung 17 zugeführt wird zwecks Freigabe der letzteren, wodurch der zu diesem Zeitpunkt im ersten Zähler 15 enthaltene Geldwert Z in den zweiten Zähler 16 geladen wird. Am Ende eines Verfahrenszyklus erhält ein zweiter Eingang des Oder-Gatters 20 ein zweites Setzsignal RS₂, welches über die Setzanordnung 19 dem zweiten Eingang der Freigabeanordnung 17 zugeführt wird, zwecks Freigabe derselben, wodurch ein zu diesem Zeitpunkt im ersten Zähler 15 enthaltener Geldwert Z-Xᵢ in den zweiten Zähler 16 geladen wird. Das Subtraktionsglied 18, welches vorzugsweise ein Exklusiv-Oder-Gatter ist, bildet jeweils einen Differenzwert der im ersten und zweiten Zähler enthaltenen Geldwerte. Der so erhaltene Differenzwert dient während Authentifizierungen jeweils der Erzeugung eines Sollwert- und Istwert-Antwortsignals im Sicherheitsmodul SM bzw. auf der Chipkarte 4. Das Sollwert- und Istwert-Antwortsignal sind somit beide eine Funktion des Differenzwertes.

Das erfindungsgemässe Verfahren beinhaltet folgenden zeitlichen Ablauf:
- Wenn bei einer Benutzung die Chipkarte 4 als bargeldloses Zahlungsmittel in den Kartenschlitz eines Verkaufsautomaten gesteckt worden ist, schaltet das Terminal die Speisung der Chipkarte 4 ein, wodurch auf der letzteren das erste Setzsignal RS₁ erzeugt wird.
- Der zu Beginn der Benutzung im ersten Zähler 15 der Chipkarte 4 enthaltene Chipkarten-Geldwert Z wird jeweils mittels des durch das Einschalten der Chipkarten-Speisung ausgelösten ersten Setzsignals RS₁ als Geldwert Z' in den zweiten Zähler 16 der Chipkarte 4 geladen.
- Nach einem Lesen des Abbildes der Chipkarte 4, d. h. nach dem Lesen von deren Indentifikationsangaben und deren am Ausgang des Subtraktionsgliedes 18 anstehenden Differenzwert Z-Z' = 0, durch das Auswertegerät 1 und seiner Weiterleitung an das Sicherheitsmodul SM sowie
- nach einem im Sicherheitsmodul SM des Auswertegerätes 1 durchgeführten Ableiten aus den empfangenen Identifikationsangaben des Chipkarten-Codeschlüssels
- wird die Chipkarte 4 einer ersten Authentifizierung unterzogen zwecks Feststellung der Kartenechtheit.
- Zu diesem Zweck erzeugt das Sicherheitsmodul SM ein erstes Zufallssignal, welches es über den Terminal der Chipkarte 4 zuleitet. Im Sicherheitsmodul 1 wird mit Hilfe des ersten Zufallssignals, des vorhandenen Algorithmus, welcher mit demjenigen der Chipkarte 4 identisch ist, des abgeleiteten Codeschlüssels, der erhaltenen Identifikationsangaben 12a und der erhaltenen Geldwertangabe 12b, die gleich Z-Z' = 0 ist, ein Sollwert-Antwortsignal erzeugt. Auf der gleichen oder ähnlichen Weise wird auf der Chipkarte 4 mit Hilfe des ersten Zufallssignals ein Istwert-Antwortsignal erzeugt, welches über das Terminal 2 das Sicherheitsmodul SM erreicht. Im letzteren werden beide Antwortsignale miteinander verglichen. Bei vorhandener Echtheit sind beide Antwortsignale gleich. In diesem Fall veranlasst das Terminal ein Abbuchen des Geldwertes Xᵢ der verkauften Ware oder Diensleistung auf der Chipkarte 4. D. h. der Wert Xᵢ erscheint am zweiten N Bit-Eingang des Zählers 15, in welchem der dort vorhandene Geldwert Z um den Geldwert Xᵢ reduziert wird, so dass am N Bit-Ausgang des ersten Zählers 15 und damit auch am ersten N Bit-Eingang des Subtraktionsgliedes 18 ein Geldwert Z-Xᵢ erscheint. Der im zweiten Zähler 16 enthaltene Geldwert Z = Z' bleibt zu diesem Zeitpunkt unverändert, so dass am N Bit-Ausgang des Subtraktionsgliedes 18 als Differenzwert ein Geldwert Z-Xᵢ-Z = -Xᵢ ansteht, welcher bei der nächsten, zweiten Authentifizierung als Geldwertangabe 12b verwendet wird. In der Praxis kann es geschehen, dass kurz nacheinander mehrere Abbuchungen von Geldwerten verkaufter Waren oder Dienstleistungen erfolgen bevor die nächste Authentifizierung ausgelöst wird. In diesem Fall sind die Ausgangswerte des Zählers 15 und des Subtraktionsgliedes 18 gleich Z-ΣXᵢ bzw. -ΣXᵢ mit i = 1 bis M, wenn M die Anzahl Abbuchen bezeichnet.
- Bei erkannter Kartenechtheit und nach mindestens einer, durch Waren- oder Dienstleistungsbezug bedingten Reduzierung des im ersten Zähler 15 der Chipkarte 4 enthaltenen Chipkarten-Geldwertes wird die Chipkarte 4 einer zweiten Authentifizierung unterzogen zwecks Feststellung, ob und um welchen Betrag der Chipkarten-Geldwert reduziert wurde. Die zweite Authentifizierung erfolgt auf die gleiche oder ähnliche Weise wie die erste, mit dem Unterschied, dass alle benötigten Werte, ausser die Geldwertangabe 12b, sich bereits im Sicherheitsmodul befinden. Die Geldwertangabe 12b, d. h. der Differenzwert -Xᵢ bzw. -ΣXᵢ am Ausgang des Subtraktionsgliedes 18 wird nach einem Lesen des im ersten Speicher 15 enthaltenen Geldwertes vom Terminal gerechnet und an das Sicherheitsmodul SM weitergeleitet, worauf dieses ein zweites Zufallsignal erzeugt und über das Terminal an die Chipkarte 4 weiterleitet. Dadurch wird dort wieder ein Istwert-Antwortsignal erzeugt, welches über das Terminal das Sicherheitsmodul SM erreicht, wo es mit einem dort erzeugten Sollwert-Antwortsignal verglichen wird.
- Darauf wird anschliessend, bei Übereinstimmung der beiden Antwortsignale, im Auswertegerät 1 ein im Verrechnungszähler 5 enthaltener Geldwert um den gleichen Betrag erhöht, um den der im ersten Zähler 15 enthaltene Chipkarten-Geldwert reduziert wurde, nämlich Xᵢ bzw. ΣXᵢ.
- Am Ende des ersten Verfahrenszyklus wird der im ersten Zähler 15 enthaltene Chipkarten-Geldwert Z-Xᵢ bzw. Z-ΣXᵢ mit dem zweiten Setzsignal RS₂ in den zweiten Zähler 16 der Chipkarte 4 geladen, worauf die zweite Authentifikation verlassen wird.
- Nach dem zweiten Setzsignal RS₂ erfolgen möglicherweise weitere Verkäufe mittels des Verkaufsautomaten mit entsprechenden Reduzierungen des im ersten Zähler 15 der Chipkarte 4 enthaltenen Chipkarten-Geldwertes, worauf ein verbleibender nachfolgender Teil des Verfahrenszyklus erneut durchlaufen wird bis zur Erzeugung eines weiteren zweiten Setzsignals RS₂.

Im Überblick: Während der beiden Authentifizierungen wird somit jeweils mittels des der betreffenden Authentifizierung zugehörigen und vom Auswertegerät zugeführten Zufallssignals auf der Chipkarte 4 ein Istwert-Antwortsignal erzeugt, welches ausser einer Funktion des betreffenden Zufallsignals noch eine Funktion unter anderem der Identifikationsangaben, des Codeschlüssels und des Algorithmus der Chipkarte 4 ist, welche alle drei ein Teil von deren Abbild sind, und welches während der Authentifizierungen jeweils mit einem auf ähnliche Weise im Auswertegerät durch das gleiche Zufallssignal erzeugten Sollwert-Antwortsignal verglichen wird. In den beiden Authentifizierungen wird dabei jeweils der Differenzwert der im ersten und zweiten Zähler 15 und 16 enthaltenen Geldwerte zur Erzeugung des Sollwert- und Istwert-Antwortsignals verwendet, welche beide somit auch eine Funktion des Differenzwertes sind. Eine Authentifikation kann dabei nur durch eines der beiden Setzsignale RS₁ oder RS₂ verlassen werden.

## Patentansprüche

1. Verfahren
• bei einer Benutzung einer Chipkarte (4) als bargeldloses Zahlungsmittel in Verkaufsautomaten,
• welche Chipkarte (4) zu Beginn der Benutzung
• nach einem Lesen eines Abbildes der Chipkarte (4) durch ein Auswertegerät (1) und
• nach einem im letzteren durchgeführten Ableiten eines Chipkarten-Codeschlüssels
• einer ersten Authentifizierung unterzogen wird zwecks Feststellung der Kartenechtheit und
• welche bei erkannter Kartenechtheit nach mindestens einer, durch Waren- oder Dienstleistungsbezug bedingten Reduzierung (-Xᵢ) eines in einem ersten Zähler (15) der Chipkarte (4) enthaltenen Chipkarten-Geldwertes (Z)
• einer zweiten Authentifizierung unterzogen wird zwecks Feststellung, ob und um welchen Betrag der Chipkarten-Geldwert reduziert wurde,
• worauf anschliessend im Auswertegerät (1) ein in einem Verrechnungszähler (5) enthaltener Geldwert um den gleichen Betrag erhöht wird, um den der im ersten Zähler (15) enthaltene Chipkarten-Geldwert reduziert wurde,
• wobei während der beiden Authentifizierungen jeweils mittels eines der betreffenden Authentifizierung zugehörigen und vom Auswertegerät zugeführten Zufallssignals auf der Chipkarte (4) ein Istwert-Antwortsignal erzeugt wird,
• welches ausser einer Funktion des betreffenden Zufallsignals noch eine Funktion unter anderem von Identifikationsangaben (12a), eines Codeschlüssels und eines Algorithmus der Chipkarte (4) ist, welche alle drei ein Teil von deren Abbild sind, und
• welches während der Authentifizierungen jeweils mit einem auf ähnliche Weise im Auswertegerät (1) durch das gleiche Zufallssignal erzeugten Sollwert-Antwortsignal verglichen wird,
dadurch gekennzeichnet,
• dass der zu Beginn der Benutzung im ersten Zähler (15) der Chipkarte (4) enthaltene Chipkarten-Geldwert (Z) jeweils mittels eines durch ein Einschalten der Chipkarten-Speisung ausgelösten ersten Setzsignals (RS₁) in einen zweiten Zähler (16) der Chipkarte (4) geladen wird,
• dass in den beiden Authentifizierungen jeweils ein Differenzwert (-Xᵢ bzw. -ΣXᵢ) der im ersten und zweiten Zähler (15, 16) enthaltenen Geldwerte zur Erzeugung des Sollwert- und Istwert-Antwortsignals verwendet wird, welche beide somit auch eine Funktion des Differenzwertes (-Xᵢ bzw. -ΣXᵢ) sind, und
• dass der am Ende eines ersten Verfahrenszyklus im ersten Zähler (15) enthaltene Chipkarten-Geldwert (Z-Xᵢ bzw. Z-ΣXᵢ) mit einem zweiten Setzsignal (RS₂) in den zweiten Zähler (16) der Chipkarte (4) geladen wird, worauf die zweite Authentifikation verlassen wird.

2. Verfahren nach Anspruch 1, dadurch gekennzeichnet, dass eine Authentifikation nur durch eines der beiden Setzsignale (RS₁,RS₂) verlassen werden kann.

3. Verfahren nach Anspruch 1 oder 2, dadurch gekennzeichnet, dass nach dem zweiten Setzsignal (RS₂) weitere Verkäufe mittels der Verkaufsautomaten erfolgen mit entsprechenden Reduzierungen des im ersten Zähler (15) der Chipkarte (4) enthaltenen Chipkarten-Geldwertes, worauf ein verbleibender nachfolgender Teil des Verfahrenszyklus erneut durchlaufen wird bis zur Erzeugung eines weiteren zweiten Setzsignals (RS₂).

4. Verfahren nach einem der Ansprüche 1 bis 3, dadurch gekennzeichnet, dass der Differenzwert mittels eines auf der Chipkarte vorhandenen Exklusiv-Oder-Gatters ermittelt wird, dessen beide Eingänge mit einem Ausgang des ersten beziehungsweise zweiten Zählers verbunden sind.

5. Verfahren nach einem der Ansprüche 1 bis 4, dadurch gekennzeichnet, dass die Verkaufsautomaten Waren- oder Dienstleistungs-Verkaufsautomaten sind.

6. Verfahren nach Anspruch 5, dadurch gekennzeichnet, dass die Dienstleistungs-Verkaufsautomaten Telefonstationen sind.

## Claims

1. A method
- in a use of a chip card (4) as cash-less payment means in automatic sales machines,
- which chip card (4) at the beginning of the use
- after reading of an image of the chip card (4) by an evaluation unit (1) and
- after derivation, effected in the latter, of a chip card code key,
- is subjected to a first authentification operation for the purposes of establishing card authenticity and
- which when card authenticity is recognised, after at least one reduction (-Xᵢ), caused by article or service purchase, in a chip card money value (Z) contained in a first counter (15) of the chip card (4),
- is subjected to a second authentification operation for the purposes of establishing whether and by what amount the chip card money value was reduced,
- whereupon then in the evaluation unit (1) a money value contained in a charging meter (5) is increased by the same amount as that by which the chip card money value contained in the first counter (15) was reduced,
- wherein during the two authentification operations a respective actual value answer signal is produced by means of a random signal which is associated with the authentification operation in question and which is supplied by the evaluation unit, on the chip card (4),
- which answer signal, besides a function of the random signal in question, is also a function inter alia of identification details (12a), a code key and an algorithm of the chip card (4), which all three are a part of the image thereof, and
- which signal during the authentification operations is respectively compared to a reference value answer signal which is produced in a similar manner in the evaluation unit (1) by the same random signal,
characterised in that
- the chip card money value (Z) which is contained at the beginning of the use in the first counter (15) of the chip card (4) is respectively loaded into a second counter (16) of the chip card (4) by means of a first setting signal (RS₁) which is triggered by the chip card power feed being switched on,
- in each of the two authentification operations a respective difference value (-Xᵢ and -ΣXᵢ) of the money values contained in the first and second counters (15, 16) is used to produce the reference value and actual value answer signals which are both therefore also a function of the difference value (-Xᵢ and -ΣXᵢ), and
- the chip card money value (Z-Xᵢ and Z-ΣXᵢ respectively) contained in the first counter (15) at the end of a first method cycle is loaded with a second setting signal (RS₂) into the second counter (16) of the chip card (4), whereupon the second authentification operation is quitted.

2. A method according to claim 1 characterised in that an authentification operation can be quitted only by one of the two setting signals (RS₁, RS₂).

3. A method according to claim 1 or claim 2 characterised in that after the second setting signal (RS₂) further sales are effected by means of the automatic sales machines with corresponding reductions in the chip card money value contained in the first counter (15) of the chip card (4), whereupon a remaining subsequent part of the method cycle is again implemented until a further second setting signal (RS₂) is produced.

4. A method according to one of claims 1 to 3 characterised in that the difference value is ascertained by means of an exclusive-OR-gate which is present on the chip card and the two inputs of which are connected to the output of the first and second counters respectively.

5. A method according to one of claims 1 to 4 characterised in that the automatic sales machines are automatic article or service sales machines.

6. A method according to claim 5 characterised in that the automatic service sales machines are telephone stations.

## Revendications

1. Procédé à mettre en oeuvre lors de l'utilisation d'une carte (4) à mémoire en tant que moyen de paiement sans numéraire dans un distributeur automatique,
◆ carte (4) à mémoire qui est soumise, au début de l'utilisation
◆ après une lecture d'une configuration de la carte (4) à mémoire par un dispositif d'évaluation (1) et
◆ après une dérivation, effectuée dans ce dernier, d'une clé de code de la carte à mémoire,
◆ à une première authentification afin de déterminer l'authenticité de la carte et qui est soumise,
lorsque l'authenticité de la carte été reconnue, après au moins une réduction (- Xᵢ), provoquée par un achat de marchandises ou de services, d'une valeur monétaire (Z) contenue dans un premier compteur (15) de la carte (4) à mémoire,
◆ à une deuxième authentification afin de déterminer si la valeur monétaire de la carte à mémoire a été réduite et de quel montant elle l'a été,
◆ à la suite de quoi une valeur monétaire contenue dans un premier compteur de règlement (5) dans le dispositif d'évaluation (1) est augmentée du même montant que celui de la réduction de la valeur monétaire de carte à mémoire contenue dans le premier compteur (15),
◆ un signal de réponse de valeur réelle étant engendré sur la carte (4) à mémoire, pendant chacune des deux authentifications, au moyen d'un signal stochastique associé à l'authentification concemée et envoyé par le dispositif d'évaluation,
◆ le signal de réponse de valeur réelle étant non seulement une fonction du signal stochastique concemé mais aussi une fonction entre autres de données d'état d'identification (12a) , d'une clé de code et d'un algorithme de la carte (4) à mémoire qui font tous trois partie de la configuration de celle-ci,
◆ et étant comparé pendant chacune des authentifications respectivement à un signal de réponse de valeur de consigne, engendré d'une manière analogue dans le dispositif d'évaluation (1) par le même signal stochastique,
caractérisé en ce que
◆ la valeur monétaire (Z) de carte à mémoire, contenue au début de l'utilisation dans le premier compteur (15) de la carte (4) à mémoire, est chargée dans un deuxième compteur (16) de la carte (4) à mémoire par l'effet d'un premier signal de positionnement (RS₁) déclenché par une mise en service de l'alimentation de la carte à mémoire,
◆ en ce qu'une valeur de différence (- Xᵢ ou - ΣXᵢ) entre les valeurs monétaires contenues dans le premier et le deuxième compteurs (15, 16) est utilisée pour chacune des deux authentifications pour engendrer les signaux de réponse de valeur de consigne et de valeur réelle, qui sont donc tous deux aussi fonction de la valeur de différence (- Xᵢ ou-ΣXᵢ), et
◆ en ce que la valeur monétaire (Z - Xᵢ ou Z - ΣXᵢ) contenue dans le premier compteur (15) à la fin d'un premier cycle de procédé est chargée dans le deuxième compteur (16) de la carte (4) à mémoire par l'effet d'un deuxième signal de positionnement (RS₂), ce qui provoque la deuxième authentification.

2. Procédé selon la revendication 1, caractérisé en ce qu'une authentification ne peut être quittée que par l'effet de l'un des deux signaux de positionnement (RS₁, RS₂).

3. Procédé selon la revendication 1 ou 2, caractérisé en ce que d'autres ventes peuvent être effectués au moyen du distributeur automatique après le deuxième signal de positionnement (RS₂), en provoquant des réductions correspondantes de la valeur monétaire de carte à mémoire contenue dans le premier compteur (15) de la carte (4) à mémoire, à la suite de quoi une partie résiduelle suivante du cycle de procédé est de nouveau mise en oeuvre jusqu'à la génération d'un nouveau deuxième signal de positionnement (RS₂).

4. Procédé selon l'une des revendications 1 à 3, caractérisé en ce que la valeur de différence est déterminée au moyen d'une porte Exclusive-OU, qui est présente sur la carte à mémoire et dont les deux entrées sont reliées chacune à une sortie du premier et du deuxième compteurs.

5. Procédé selon l'une des revendications 1 à 4, caractérisé en ce que les distributeurs automatiques sont des distributeurs automatiques de marchandises ou de services.

6. Procédé selon la revendication 5, caractérisé en ce que les distributeurs automatiques sont des stations téléphoniques.
